# EUROPÄISCHE PATENTSCHRIFT

(11) **EP 0 364 712 B1**
(45) Veröffentlichungstag und Bekanntmachung des Hinweises auf die Patenterteilung: **13.04.1994**
(21) Anmeldenummer: 89116241.4
(22) Anmeldetag: 02.09.1989
(51) Int. Cl.: B01D 53/34, F23J 7/00

(54) **Verfahren zum Entfernen von Stickoxyden aus Rauchgasen**
Process for eliminating nitrogen oxides from exhaust gases
Procédé pour éliminer des oxydes d'azote de gaz de fumée

(30) Priorität: 27.09.1988 CH 3578/88
(43) Veröffentlichungstag der Anmeldung: 25.04.1990
(73) Patentinhaber: VON ROLL AG, 4563 Gerlafingen (CH)
(72) Erfinder: Rüegg, Hans, CH-5610 Wohlen (CH); Vock, René, CH-8906 Bonstetten (CH)
(74) Vertreter: Patentanwälte Schaad, Balass, Menzl & Partner AG

(56) Entgegenhaltungen:
- EP-A- 326 943
- EP-A- 0 236 686
- WO-A-89/07004
- DE-A- 3 407 689
- FR-A- 1 177 722
- FR-A- 2 379 026
- US-A- 1 964 942
- US-A- 4 181 705
- US-A- 4 507 269
- US-A-39 005 54

## Beschreibung

Die Erfindung betrifft ein Verfahren zum Entfernen von Stickoxiden aus bei einer Verbrennung entstehenden Rauchgasen und eine Vorrichtung zur Durchführung dieses Verfahrens.

Stickoxide entstehen bei der Verbrennung von fossilen Brennstoffen, Hauskehricht, industriellen Abfällen etc.. Sie können aus Gründen des Umweltschutzes nicht frei an die Umgebung abgegeben werden.

Es sind bereits verschiedene Verfahren bekannt, so z.B. aus der US-PS 3,900,554 und der US-PS 4,507,269, bei welchen Stickoxide in Rauchgasen durch Einsprühen einer Ammoniaklösung oder anderer geeigneter Reduktionsmittel, in Gegenwart des in den Rauchgasen ohnehin vorhandenen Sauerstoffs, zu Stickstoff reduziert werden.

Aus der US-A-4,181,705 ist ein Verfahren zur Verminderung des Gehalts an Stickoxiden in Rauchgasen durch Einführen von gasförmigem Ammoniak direkt in den Verbrennungsraum einer Wirbelbettanlage bekannt.

In der EP-A-236 686 wird eine Vorrichtung zur Entstickung beschrieben. Die einzelnen Leitungen für Sekundärluft für den Verbrennungsraum sind mittels je einer Zuführleitung mit einer Quelle für das Reduktionsmittel verbunden. Die Leitung für die Sekundärluft mündet in einen Windmantel, der zur Verteilung und zum Druckausgleich dient und an die eine Reihe von Düsen angeschlossen sind.

Das Einsprühen oder Eindüsen von Ammoniak oder einer anderen geeigneten Lösung in den Kesselteil einer Verbrennungsanlage erfolgt gemäss der EP-A-326 943, mit einer Priorität vom 2. Februar 1988, veröffentlicht am 09. August 1989, mit sogenannten Zweistoffdüsen, d.h. mit Düsen, in denen das Zerstäubungsmittel unmittelbar vor dem Versprühen mit der Flüssigkeit vermischt wird. Zweistoffdüsen garantieren eine gleichmässige Verteilung und eine gleichmässige Eindringtiefe der Tropfen. Sie werden in Serien eingesetzt. Jede einzelne Düse benötigt dabei ihre eigene Flüssigkeits- und Zerstäubungsmittelzuführung mit entsprechenden Regelorganen. Deshalb ist das Vorgehen sehr aufwendig. Ausserdem besitzen Zweistoffdüsen relativ grosse Abmessungen, was den Einbau in eine Verbrennungsanlage erschwert. Insbesondere ist die Ausstattung bereits bestehender Verbrennungsanlagen mit solchen Düsen, um die Anlage den neuen Umweltschutzforderungen anzupassen, äusserst schwierig, bis unmöglich. Auf diese Schwierigkeiten wird in der US-PS 4 507 269 hingewiesen.

Mit den Zweistoffdüsen, in denen Zerstäubungsmittel und die Flüssigkeit unmittelbar vor dem Versprühen vermischt werden, werden zwar unter Verwendung von grossen Mengen Treibmittel sehr feine Tropfen erzielt, jedoch ist die für eine ausreichende Reaktion erforderliche Strahleneindringtiefe der Tropfen von mehreren Metern in einen Kesselteil nicht gewährleistet. Insbesondere wird durch die für die Erzielung einer grossen Eindringtiefe erforderliche Zerstäubungsmittelmenge das Verfahren unwirtschaftlich.

Aufgabe der Erfindung ist es, ein Verfahren zum Einsprühen einer Flüssigkeit in den Kesselteil einer Verbrennungsanlage vorzuschlagen, das mit Düsen mit einem kleineren Platzbedarf als die bekannten Zweistoffdüsen auskommt.

Mit Kesselteil wird jener Bereich einer Verbrennungsanlage bezeichnet, in dem die die Flamme verlassenden Rauchgase durch eine gekühlte Wand, von einem Kühlmittel durchflossene Rohre oder durch eine andere bekannte Einrichtung gekühlt werden. Mithin herrscht im Kesselteil immer ein Temperaturgradient mit in Fliessrichtung der Rauchgase fallendem Wert. Der Kesselteil kann kontinuierlich an den Verbrennungsraum anschliessen, oder einen eigenen Raum bilden, der mit dem Verbrennungsraum durch eine oder mehrere Leitungen verbunden ist.

Die Aufgabe wird durch die Merkmale von Verfahrensanspruch 1 bzw. von Vorrichtungsanspruch 7 gelöst.

Es wurde überraschend gefunden, dass das Zerstäubungsmittel nicht unmittelbar vor dem Versprühen der zu versprühenden Flüssigkeit zugegeben werden muss, d.h. dass man ohne Zweistoffdüsen auskommt, wenn man das Zerstäubungsmittel bereits im Zuleitungsrohr für die Flüssigkeit zugibt. Mithin wird erfindungsgemäss bereits in einem Teil des Zuleitungsrohrs für die Flüssigkeit eine Mischung aus Zerstäubungsmittel und Flüssigkeit transportiert. Diese Mischung gelangt dann nach der Verzweigung des Zuführungsrohrs für die Flüssigkeit in kleinere Rohre. Letztere führen zu den Sprühstellen und sind an ihren Enden als Einstoffdüsen z.B. konisch ausgebildet. Mithin können erfindungsgemäss einfache Rohre anstelle der komplizierten Zweistoffdüsen als Sprühstelle dienen. Da diese Rohre verhältnismässig kleine Dimensionen aufweisen, können sie an allen gewünschten Orten auch in bereits bestehende Kessel eingebaut werden. Sie können z.B. durch jeweils zwei Kühlrohre verbindende Bleche, sogenannte Flossen, durchgesteckt werden, ohne dass die Kühlrohre umständlich ausgebogen werden müssen.

Es ist unerwartet, dass durch einfache Zugabe des die Tropfenbildung und den Tropfentransport bewirkenden Zerstäubungsmittels zur Gesamtmenge, d.h. zur noch nicht verteilten Flüssigkeit sogar bessere Ergebnisse im Kesselteil erzielt werden, als mit dem Einsatz aufwendiger Zweistoffdüsen. Durch das erfindungsgemässe Vorgehen und die daraus folgende Benützung von Einstoffdüsen werden gröbere Einzeltropfen versprüht. Dabei wird die Flüssigkeit im allgemeinen quer zur Strömungsrichtung der Rauchgase eingesprüht. Da die in gröberen Tropfen versprühte Flüssigkeit eine bedeutend kleinere spezifische Oberfläche als die feinen Tropfen aus den Zweistoffdüsen besitzen, liegt auch ein kleinerer spezifischer Luftwiderstand vor. Dadurch wird für eine bestimmte Eindringtiefe eine kleinere Menge Zerstäubungsmittel als für die feinen Tropfen benötigt. Entsprechend kann mit derselben Menge Treibmittel nach dem erfindungsgemässen Verfahren eine grössere Eindringtiefe der Tropfen in den Kesselteil erreicht werden. Die Eindringtiefe der Tropfen in den Kesselraum wird auch dadurch vergrössert, dass ein grösserer Tropfen länger bis zur vollständigen Verdampfung braucht und mithin eine grössere Lebenszeit und Verweilzeit besitzt.

Durch das grössere Volumen der Einzeltropfen wird ausserdem die Gefahr der Ueberhitzung und der damit verbundenen chemischen Veränderung des Reduktionsmittels, beispielsweise die Verbrennung des Ammoniaks zu Stickoxid vermieden, so dass das erfindungsgemässe Verfahren eine grössere Temperaturtoleranz vor allem an der oberen Temperaturgrenze aufweist, als die bisher bekannten Verfahren. Deshalb können die Eindüsstellen weiter vorne im Kesselteil, wo höhere Temperaturen herrschen, angeordnet sein. Als optimaler Temperaturbereich zur chemischen Umsetzung mit Ammoniak werden Temperaturen von 700-1100 °C vorzugsweise 850-950 °C betrachtet, wobei diese Temperatur nicht kritisch ist und sowohl über - als auch unterschritten werden kann.

Ausser dem geringeren Sprühmittelbedarf bedarf das erfindungsgemässe Verfahren auch eines geringeren apparativen Aufwandes, denn neben den aufwendigen Zweistoffdüsen wird auch auf deren Zuleitungen mit den entsprechenden Regelorganen verzichtet.

Die Vorrichtung zur Durchführung des erfindungsgemässen Verfahrens weist Merkmale gemäss Anspruch 6 auf.

In dieser Vorrichtung werden herkömmliche Rohre, Leitungen, Absperrorgane und Steuerungen verwendet. Bei den Einstoffdüsen handelt es sich im wesentlichen um Rohre, mit besonders ausgestalteten Endbereichen. Die Endbereiche der Rohre können konisch verjüngt sein, sodass ein runder Strahl versprüht wird. Sie können auch als schlitzförmige Fächerdüsen ausgebildet sein. Dieselbe Vorrichtung kann sowohl Rundstrahldüsen als auch Fächerdüsen aufweisen. Vorzugsweise sind die Rundstrahldüsen abwechselnd mit den Fächerdüsen angeordnet.

Zwischen dem Zuleitungsrohr für Flüssigkeit, das eine grössere Flüssigkeitsmenge führt und den einzelnen Sprühstellen können mehrfache Verzweigungen vorhanden sein. Ausserdem können Absperrorgane vorgesehen sein, die einzeln oder gruppenweise z.B. in einzelnen Ebenen betätigbar ausgebildet sind. Dadurch kann den unterschiedlichen Temperaturen im Kesselteil, beispielsweise bei Wechseln des zu verbrennenden Materials oder der Verbrennungsbedingungen durch Wahl der Sprühstellen Rechnung getragen werden.

Für das erfindungsgemässe Verfahren wird im allgemeinen handelsübliche Ammoniaklösung, z.B. 25% verwendet. Es können auch andere Stoffe, die bei Kesseltemperaturen Ammoniak entwickeln, beispielsweise verschiedene bekannte Amoniumsalze, wie Amoniumcarbonat, Amoniumformiat, Amoniumoxalat oder Harnstoff verwendet werden.

Als Zerstäubungsmittel das die Entstehung und den Transport der einzelnen Tropfen bewirkt, wird Druckluft oder Druckdampf verwendet. Es kann beispielsweise mit Druckdampf im Bereich von etwa 3,5 - 4 bar und mit Druckluft im Bereich von etwa 6 bar gearbeitet werden.

Nach der Durchführung des erfindungsgemässen Verfahrens, kann der entstehende Dampf kondensiert und die gesammelte Flüssigkeit, die noch nicht umgesetztes Reduktionsmittel enthalten kann, kann nach bekannten Verfahren weiter verarbeitet oder erneut dem Kreislauf in der Verbrennungsanlage zugeführt werden.

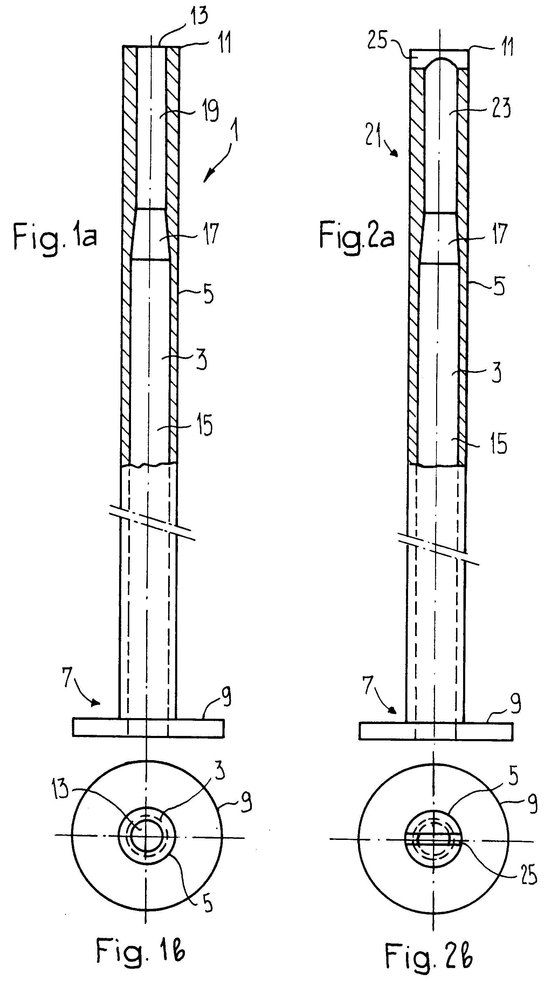

Die nachfolgenden Figuren und Beispiele dienen zur Veranschaulichung der Erfindung. Die Figuren zeigen rein schematisch
- Fig. 1 a: Die Seitenansicht einer Einstoffdüse zur Durchführung des erfindungsgemässen Verfahrens in teilweise schnittbildlicher Darstellung.
- Fig. 1 b: Die Draufsicht der Einstoffdüse gemäss Fig. 1a
- Fig. 2 a: Die Seitenansicht einer weiteren Einstoffdüse zur Durchführung des erfindungsgemässen Verfahrens, teilweise in schnittbildlicher Darstellung.
- Fig. 2 b: Die Draufsicht der Einstoffdüse gemäss Fig. 2 a

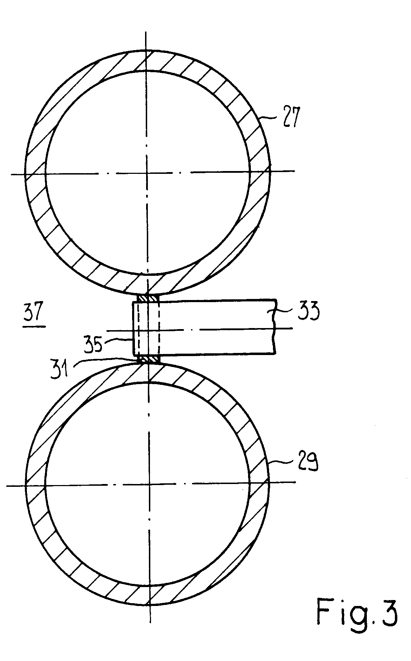

- Fig. 3: Die Anordnung einer Einstoffdüse im Kesselteil einer Verbrennungsanlage.

Gleiche Elemente in den Figuren werden mit denselben Bezugszeichen bezeichnet.

Die als Rundstrahldüse ausgebildete Einstoffdüse 1 in den Figuren 1a und 1b weist ein mit einer axialen Bohrung 3 versehenes Rohr 5 auf, an dessen eintrittsseitigem Ende 7 ein Flansch 9 angeordnet ist und dessen austrittseitiges Ende 11 eine runde Austrittsöffnung 13 für den in den Kesselteil austretenden Flüssigkeitsstrahl bildet. Die axiale Bohrung 3 weist drei Bereiche auf: im Anschluss an den Flansch 9 einen ersten längeren zylindrischen Bereich 15, einen daran anschliessenden kurzen, in Fliessrichtung sich verengenden konischen Bereich 17 und anschliessend einen zweiten zylindrischen Bereich 19. Letztere ist kürzer als der erste zylindrische Bereich 15 und länger als der konische Bereich 17. Der Flansch 9 schliesst an ein (nicht dargestelltes) Zuleitungsrohr an.

Im Betrieb durchläuft die durch das Zuleitungsrohr in die Einstoffdüse 1 eintretende Mischung aus Flüssigkeit und Zerstäubungsmittel den ersten zylindrischen Bereich 15, wird im kurzen konischen Bereich 17 beschleunigt und tritt nach Durchlaufen des zweiten zylindrischen Bereiches 19 als runder, aus vielen Einzeltropfen bestehender Strahl aus der runden Austrittsöffnung 13 in den (nicht dargestellten) Kesselteil.

Die als Fächerdüse ausgebildete Einstoffdüse 21 in den Figuren 2a und 2b weist ebenfalls ein mit einer axialen Bohrung 3 versehenes Rohr 5 und einen Flansch 9 auf. Die ersten zwei Bereiche 15 und 17 der Bohrung 3 stimmen mit jenen in den Figuren 1a und 1b überein. Der dritte, d.h. der zweite zylindrische Bereich ist als Sackbohrung 23 ausgebildet. Die Einstoffdüse 21 endet in einer spaltförmigen Austrittsöffnung 25, durch die die Flüssigkeit in einem fächerförmigen aus vielen Einzeltropfen bestehenden Strahl in den Kesselteil eintritt.

Rundstrahldüsen und Fächerdüsen können in beliebiger Kombination, vorzugsweise abwechselnd angeordnet sein. Selbstverständlich sind ausser den beiden dargestellten Düsenformen weitere Düsenformen für das erfindungsgemässe Verfahren geeignet.

In Figur 3 sind zwei von einem Kühlmedium durchflossenen Kesselrohre 27, 29 dargestellt, die durch ein Metallblech 31, der auch als Flosse bezeichnet wird, miteinander verbunden sind. Das Metallblech 31 ist von einer Einstoffdüse 33 durchsetzt, dessen Austrittsöffnung 35 in den nicht weiter dargestellten Innenraum 37 des Kesselteils hineinragt. Durch die erfindungsgemässe Verwendung von Einstoffdüsen können auch bereits bestehende Verbrennungsanlagen umweltschonend betrieben werden, da die Einstoffdüsen problemlos in den zwischen den Kesselrohren vorliegenden engen Raum eingebaut werden können.

Sowohl die einzelnen Verfahrensparameter, als auch die apparative Ausgestaltung können vom Fachmann im Rahmen seiner Kenntnisse variiert werden. Insbesondere kann die Ammoniaklösung für das erfindungsgemässe Verfahren erst innerhalb der Anlage durch Einleiten von Ammoniak ins Wasser oder eine wässrige Lösung erzeugt werden.

In den nachfolgend tabellarisch dargestellten Beispielen wurde das erfindungsgemässe Verfahren zum Entfernen von Stickoxiden (NOₓ) aus dem Rauchgas, das bei der Verbrennung von Hausmüll entstanden ist angewendet.

Die Eindüsung oder das Einsprühen ist in den Feuerraum im sogenannten 1. Zug erfolgt. Das Einsprühen kann selbstverständlich auch an einem anderen Ort erfolgen.

| Beispiel: | *Bm³/h | 1 | 2 | 3 |
|---|---|---|---|---|
| Rauchgasstrom | *Bm³/h | 280000 | 280000 | 250000 |
| Rauchgastemperatur in der Eindüsungszone | °C | 900 | 950 | 850 |
| Feuerraumabmessung | m*m | 5,0 * 4,8 | 5,0 * 4,8 | 5,0 * 4,8 |
| Zerstäubungsmittelmenge | kg/h | 800 | 800 | 800 |
| Massenstrom der NH₃-Lösung | kg/h | 100 | 50 | 200 |
| Volumenstrom durch eine Düse | *Bm³/h | 36 | 36 | 40 |
| Düsenaustrittsgeschwindigkeit | m/s | 110 | 110 | 120 |
| Konzentration der NH₃ -Lösung | % | 25 | 25 | 15 |
| NOₓ-Konzentration vor der Reduktionszone | mg/m³ | 380 | 410 | 390 |
| NOₓ-Konzentration nach der Reduktionszone | mg/m³ | 68 | 205 | 51 |

| | | | | |
|---|---|---|---|---|
| * Bm³ = Betriebskubikmeter | | | | |

## Patentansprüche

1. Verfahren zum Entfernen von Stickoxiden aus bei einer Verbrennung entstehenden Rauchgasen mittels einer mindestens ein Reduktionsmittel enthaltenden Flüssigkeit,
bei dem ein gasförmiges, unter Druck stehendes Zerstäubungsmittel in das Zuleitungsrohr für die Flüssigkeit vor der Verzweigung zu den einzelnen Sprühstellen eingebracht und dabei mit der Flüssigkeit gemischt wird und
bei dem mittels der als Einstoffdüsen ausgebildeten Sprühstellen die Flüssigkeit quer zur Strömungsrichtung der Rauchgase in den stromabwärts vom Verbrennungsraum liegenden Bereich der Verbrennungsanlage, in dem die Rauchgase durch eine Einrichtung gekühlt werden, eingesprüht wird, wobei in jenen Teil dieses Bereiches eingesprüht wird, wo Rauchgastemperaturen von 700 bis 1100°C herrschen.

2. Verfahren nach Anspruch 1, dadurch gekennzeichnet, dass man eine Ammoniaklösung und/oder eine Lösung einer bei der Temperatur des genannten Bereichs Ammoniak freisetzenden Verbindung einsprüht.

3. Verfahren nach einem der vorangehenden Ansprüche, dadurch gekennzeichnet, dass man als Zerstäubungsmittel Druckluft oder Druckdampf verwendet.

4. Verfahren nach einem der vorangehenden Ansprüche, dadurch gekennzeichnet, dass man den Ort des Einsprühens innerhalb des genannten Bereichs nach dem dort vorliegenden Temperaturprofil steuert.

5. Vorrichtung zum Entfernen von Stickoxiden aus bei einer Verbrennung entstehenden Rauchgasen und zur Durchführung des Verfahrens nach einem der Ansprüche 1 bis 4
mit Mitteln zum Einsprühen einer mindestens ein Reduktionsmittel enthaltenden Flüssigkeit durch ein gasförmiges, unter Druck stehendes Zerstäubungsmittel und
mit einem Zerstäubungsmittel-Zuleitungsrohr, das zwecks Mischung des Zerstäubungsmittels und der Flüssigkeit in das Zuleitungsrohr für die Flüssigkeit vor dessen Verzweigung zu den einzelnen Sprühstellen mündet,
wobei die einzelnen Sprühstellen als Einstoffdüsen (1, 21, 33) ausgebildet sind und
wobei diese Düsen derart ausgebildet und angeordnet sind, dass die Flüssigkeit quer zur Strömungsrichtung der Rauchgase und in den stromabwärts vom Verbrennungsraum liegenden Bereich der Verbrennungsanlage, in dem die Rauchgase durch eine Einrichtung gekühlt werden, eingesprüht werden kann, und zwar in jenen Teil dieses Bereiches, wo Rauchgastemperaturen von 700 bis 1100°C herrschen.

6. Vorrichtung nach Anspruch 5, dadurch gekennzeichnet, dass die Einstoffdüsen als sich konisch oder stufenförmig verengende Rohre, d.h. Rundstrahldüsen, ausgebildet sind.

7. Vorrichtung nach Anspruch 5 oder 6, dadurch gekennzeichnet, dass die Einstoffdüsen als Fächerdüsen ausgebildet sind.

8. Vorrichtung nach einem der Ansprüche 5 bis 7, dadurch gekennzeichnet, dass in den Zweigrohren zwischen dem Zuleitungsrohr für die Flüssigkeit und den Sprühstellen Absperrorgane vorgesehen sind, die einzeln oder in Gruppen betätigbar sind.

## Claims

1. Process for the removal of nitrogen oxides from flue gases produced in incineration, by means of a liquid containing at least one reducing agent, in which a gaseous pressurized atomizing agent is introduced into the feed pipe for the liquid before the branching to the individual spray points, during which it is mixed with the liquid, and in which, by means of the spray points which are designed as single-substance nozzles, the liquid is sprayed transversely to the direction of flow of the flue gases into that region of the incineration plant which is located downstream from the incineration chamber and in which the flue gases are cooled by a device, spraying-in taking place in that part of this region where flue-gas temperatures of 700 to 1100°C prevail.

2. Process according to Claim 1, characterized in that an ammonia solution and/or a solution of a compound giving off ammonia at the temperature of the region mentioned is sprayed in.

3. Process according to one of the preceding claims, characterized in that compressed air or compressed steam is used as atomizing agent.

4. Process according to one of the preceding claims, characterized in that the location of the spraying-in within the region mentioned is controlled according to the temperature profile existing there.

5. Apparatus for the removal of nitrogen oxides from flue gases produced in incineration and for carrying out the process according to Claims 1 - 4 having means for the spraying-in of a liquid containing at least one reducing agent through a gaseous pressurized atomizing agent and having an atomizing-agent feed pipe which opens, for the purpose of mixing the atomizing agent and the liquid, into the feed pipe for the liquid before the branching of the latter to the individual spray points, the individual spray points being designed as single-substance nozzles (1, 21, 33) and these nozzles being designed and arranged such that the liquid can be sprayed transversely to the direction of flow of the flue gases and into that region of the incineration plant which is located downstream from the incineration chamber and in which the flue gases are cooled by a device, specifically into that part of this region where flue-gas temperatures of 700 to 1100°C prevail.

6. Apparatus according to Claim 5, characterized in that the single-substance nozzles are designed as pipes narrowing conically or in a stepped shape, i.e. round-jet nozzles.

7. Apparatus according to Claim 5 or 6, characterized in that the single-substance nozzles are designed as fan nozzles.

8. Apparatus according to one of Claims 5 to 7, characterized in that shut-off devices, which can be operated individually or in groups, are provided in the branch pipes between the feed pipe for the liquid and the spray points.

## Revendications

1. Procédé pour éliminer des oxydes d'azote de gaz de fumée formés lors d'une combustion, au moyen d'un liquide contenant au moins un agent de réduction,
dans lequel un agent de dispersion gazeux sous pression est introduit dans le tuyau d'arrivée du liquide avant la dérivation vers des postes de vaporisation individuels et est ainsi mélangé avec le liquide et
dans lequel, au moyen des postes de vaporisation formés de buses à un élément, le liquide est vaporisé de façon perpendiculaire au sens d'écoulement des gaz de fumée dans la zone de l'installation située en aval de la chambre de combustion, dans laquelle les gaz de fumée sont refroidis par un dispositif, la vaporisation ayant lieu dans tout l'espace de cette zone, où règnent des températures des gaz de fumée de 700 à 1100°C.

2. Procédé selon la revendication 1, caractérisé en ce qu'on vaporise une solution d'ammoniaque et/ou une solution d'un composé dégageant de l'ammoniac, à la température de la zone mentionnée.

3. Procédé selon l'une quelconque des revendications précédentes, caractérisé en ce que l'on utilise de l'air comprimé ou de la vapeur comprimée comme agent de dispersion.

4. Procédé selon l'une quelconque des revendications précédentes, caractérisé en ce qu'on commande l'orientation de la vaporisation à l'intérieur de la zone mentionnée, en fonction du profil des températures qui y règnent.

5. Dispositif pour éliminer des oxydes d'azote de gaz de fumée formés lors d'une combustion et pour la réalisation du procédé selon l'une quelconque des revendications 1 à 4,
avec des moyens pour la vaporisation d'un liquide contenant au moins un agent de réduction à l'aide d'un agent de dispersion gazeux sous pression et
avec un tuyau d'arrivée de l'agent de dispersion, qui dans le but de procéder au mélange de l'agent de dispersion et du liquide, débouche dans le tuyau d'arrivée du liquide avant sa dérivation vers des postes de vaporisation individuels,
les postes de vaporisation individuels étant formés de buses à un élément (1, 21, 33) et
ces buses étant formées et installées de telle sorte que le liquide puisse être vaporisé de façon perpendiculaire au sens d'écoulement des gaz de fumée dans la zone de l'installation de combustion située en aval de la chambre de combustion, dans laquelle les gaz de fumée sont refroidis par un dispositif, à savoir dans tout l'espace de cette zone, où règnent des températures de gaz de fumée de 700 à 1100°C.

6. Dispositif selon la revendication 5, caractérisé en ce que les buses à un élément ont la forme de tuyaux effilés coniques ou se réduisant progressivement, c'est-à-dire sont des buses omnidirectionnelles.

7. Dispositif selon la revendication 5 ou 6, caractérisé ce que les buses à un élément sont disposées en éventail.

8. Dispositif selon l'une quelconque des revendications 5 à 7, caractérisé ce qu'on prévoit dans les tuyaux de liaison entre le tuyau d'arrivée du liquide et les postes de vaporisation, des organes d'arrêt , actionnés de façon individuelle ou par groupes.
